# EUROPÄISCHE PATENTANMELDUNG

(11) **EP 2 581 857 A1**
(43) Veröffentlichungstag der Anmeldung: **17.04.2013**
(21) Anmeldenummer: 11185019.4
(22) Anmeldetag: 13.10.2011
(51) Int. Cl.: G06K 19/077

(54) **Transponder für ein funkbasiertes Identifikationssystem**

(71) Anmelder: Siemens Aktiengesellschaft, 80333 München (DE)
(72) Erfinder: Müller, Klaus, 96178 Pommersfelden (DE)

(57) **Zusammenfassung**

Die Erfindung betrifft einen Transponder (T) für ein funkbasiertes Identifikationssystem, mit einer Trägerfolie (TF), wobei auf der Trägerfolie (TF) eine flächige Antenne (A) und ein elektronischer Schaltkreis (C) aufgebracht sind, und wobei die Trägerfolie (TF) mit der Antenne (A) und dem Schaltkreis (C) in einer Hülle (H) aus einem flexiblen Material eingebettet ist. Dabei sind zumindest in einem Randbereich des Transponders (T) die Trägerfolie (TF) und die Hülle (H) mittels einer Prägung (P) formschlüssig miteinander verbunden. Ein solcher Transponder weist nach einem Erhitzen und dem anschließenden Erkalten im Wesentlichen dieselben Hochfrequenzeigenschaften auf, wie vor dem Erhitzungsvorgang.

## Beschreibung

Die Erfindung betrifft einen Transponder für ein funkbasiertes Identifikationssystem gemäß dem Oberbegriff des Patentanspruchs 1.

Funkbasierte Identifikationssysteme (RFID - Radio Frequency Identification) werden in vielen Bereichen der Produktion, Warenwirtschaft, Inventarisierung etc. eingesetzt, wobei mobile Datenspeicher, Transponder oder Label genannt, berührungslos von RFID-Lesegeräten ("Reader") ausgelesen und ggf. auch beschrieben werden können.

Insbesondere sog. "passive" UHF-Transponder, also solche, die ohne eine eigene Energieversorgung auskommen und aus einem vom "Reader" erzeugten elektromagnetischen Feld gespeist werden, sind häufig als flexible Trägerfolie ausgeführt, auf der eine flächige Antenne in Form einer leitfähigen Schicht (meist eine Kupfer- oder Aluminiumfolie) aufgebracht ist, und wobei an dieser Antenne mittels einer Verbindung ("Bonding") ein Halbleiterchip angeschlossen ist. Ein solcher streifenförmiger Transponder ist häufig zum Schutz vor Umwelteinflüssen in einer ebenfalls flexiblen Hülle eingebettet, die beispielsweise aus zwei Kunststofffolien oder einer "Tasche" aus Papier besteht. Oft wird dafür ein sog. "synthetisches" Papier eingesetzt, welches zur Erhöhung der mechanischen Widerstandsfähigkeit mit Fasern verstärkt sein kann.

Insbesondere bei der Verwendung solcher Transponder zur Identifizierung von Werkstücken in der industriellen Produktion können die Transponder schädlichen Umweltbedingungen ausgesetzt sein. So kann beispielsweise ein Transponder, der an einer Rohkarosse im Automobilbau befestigt ist, beim Trocknen des Lackes einer Temperatur von 200°C oder höher ausgesetzt sein. Wegen der unterschiedlichen Wärmeausdehnungskoeffizienten des Kunststoff-Trägermaterials (Trägerfolie) mit der applizierten Antenne (Metallfolie bzw. leitfähige Schicht) und der Hülle kann es im Prozeßablauf nach Erhitzung und Abkühlung stellenweise zum Auffalten der flächigen Antenne kommen, was zur Folge hat, dass die Hochfrequenz-Eigenschaften wegen der somit geänderten Antennen-Geometrie verändert sind. Obwohl der eigentliche Transponder, also die Trägerfolie mit der flächigen Antenne und dem elektronischen Schaltkreis, mit seiner Papier- oder Kunststoffhülle oft vollflächig miteinander verklebt ist, kann die beschriebene unterschiedliche wärmebedingte Ausdehnung nicht verhindert werden. Insbesondere kann es dadurch vorkommen, dass der Transponder bzw. dessen Antenne später eine geänderte Resonanzfrequenz aufweist. Eine Folge kann beispielsweise eine Reduzierung der Reichweite bzw. Lesegüte sein.

Als Abhilfe ist es möglich, die Antennenstruktur und den "Chip" anstelle auf einer Trägerfolie auf einem festen Untergrund, also beispielsweise auf einer massiven Kunststoffplatte aufzubringen. Es hat sich herausgestellt, dass durch dieses Vorgehen nach einer wärmebedingten Ausdehnung des Trägers mit der flächigen Antenne bei der anschließenden Abkühlung die Antenne nahezu vollständig in ihre ursprüngliche Form zurückfindet, ohne dass eine ungewünschte Faltenbildung auftritt. Allerdings sind solche "harten" Transponder zum einen teurer als die bekannten Folienbasierten Transponder, und zum anderen wegen der fehlenden mechanischen Flexibilität nicht überall einsetzbar.

Es ist also eine Aufgabe der vorliegenden Erfindung, einen formstabilen hitzebeständigen und dennoch flexiblen Transponder anzugeben.

Der Lösung der Aufgabe liegt die Erkenntnis zugrunde, dass ein Auffalten der Antenne verringert oder verhindert werden kann, wenn die Hülle und die Trägerfolie derart miteinander verbunden sind, dass eine nahezu synchrone Ausdehnung bei Erwärmung gegeben ist. Es ist dabei ein Kernidee der vorliegenden Erfindung, die Trägerfolie mit der applizierten Antenne und dem Halbleiterbauelement und die Hülle (Papierhülle, Kunststoffhülle) in einem Außenbereich, also außerhalb der flächigen Antenne, zusätzlich zu der Verklebung mit einer Prägestruktur auch formschlüssig miteinander zu verbinden, womit verhindert wird, dass sich die Schichten des Transponders, bedingt durch die unterschiedlichen Wärme-Ausdehnungskoeffizienten, gegeneinander verschieben, so dass ein Verformen, Knicken oder Auffalten der Antenne verringert oder sogar vermieden wird.

Die Aufgabe wird insbesondere durch einen Transponder gemäß dem Patentanspruch 1 gelöst. Dabei wird ein Transponder für ein funkbasiertes Identifikationssystem vorgeschlagen, mit einer Trägerfolie, wobei auf der Trägerfolie eine flächige Antenne und ein elektronischer Schaltkreis aufgebracht sind, und wobei die Trägerfolie mit der Antenne und dem Schaltkreis in einer Hülle aus einem flexiblen Material eingebettet ist. Dabei sind zumindest in einem Randbereich des Transponders die Trägerfolie und die Hülle mittels einer Prägung formschlüssig miteinander verbunden. Ein solcher Transponder weist nach einem Erhitzen und dem anschließenden Erkalten im Wesentlichen dieselben Hochfrequenz-Eigenschaften auf, wie vor dem Erhitzungsvorgang.

Vorteilhafte Ausgestaltungen des erfindungsgemäßen Transponders sind in den abhängigen Patentansprüchen angegeben. Die dabei beschriebenen Merkmale und deren Vorteile können entweder einzeln oder auch in freier Kombination miteinander realisiert sein.

In einer vorteilhaften Ausgestaltung ist die Prägung als ein Waffelmuster oder in einer Fischgrät-Struktur ausgeführt. Dadurch ergibt sich eine gute formschlüssige Verbindung, die thermische Ausdehnungskräfte sowohl in der Längsachse, als auch in der Querachse des Transponders gut aufnehmen kann. In weiteren alternativen Ausführungsformen können auch andere Prägemuster verwendet werden, beispielsweise als Noppen, Quer-Schraffur etc.

Als das flexible Material kann vorteilhaft eine Kunststofffolie oder ein faserverstärktes, synthetisches Papier verwendet werden. Während die Kunststofffolie unter anderem eine besonders gute Abdichtung gegen flüssige und gasförmige Substanzen bietet, bietet ein faserverstärktes synthetisches Papier eine besonders gute Festigkeit bei Zugbelastung. Außerdem kann bei einem faserverstärkten synthetischen Papier durch die Art und die Menge der enthaltenen Fasern der Temperaturausdehnungs-Koeffizient gut eingestellt werden, wobei dieser dann vorteilhaft möglichst ähnlich sein soll, wie derjenige der Trägerfolie.

Im Falle einer Ausführung der Hülle aus synthetischem Papier kann die Innenseite der Hülle vorteilhaft mit einem Kunststoff beschichtet sein, wobei im Bereich der Prägung die Hülle und die Trägerfolie miteinander verschweißt werden können. Damit erhöht sich die Festigkeit der formschlüssigen Verbindung. In einer weiteren vorteilhaften Ausgestaltung kann die Prägung und/oder die Verschweißung auch vollumfänglich umlaufend an den Außenkanten des Transponders ausgeführt sein oder - im Falle einer Verklebung oder Verschweissung - sogar vollflächig über den gesamten Transponder ausgeführt werden. Im letzteren Fall sollte jedoch sichergestellt sein, dass die bei einer Verschweißung auftretenden Temperaturen nicht zur Zerstörung des elektronischen Schaltkreises und dessen Verbindung (Bonding) zu der flächenhaft ausgestalteten Antenne führt. Anstelle einer Kunststoff-Beschichtung kann auch in dem synthetischen Papier eine Mindestmenge Kunststoff enthalten sein, so dass sich das Papier mit der Trägerfolie direkt verschweißen lässt.

Gebräuchliche Transponder sind wegen der häufig verwendeten länglichen Antennenstruktur oft rechteckig oder streifenförmig ausgeführt. In diesen Fällen wird die Prägung vorteilhaft linienförmig zumindest an den beiden Längskanten ausgeführt. Zur Vermeidung von Schäden an der flächigen Antenne und am elektronischen Schaltkreis wird vorteilhaft darauf geachtet, dass die Prägung außerhalb der flächigen Antenne und außerhalb des Bereiches des elektronischen Schaltkreises und dessen Verbindungsstellen (Bonding-Stellen) zu der flächigen Antenne ausgeführt wird.

Zusätzlich zu der formschlüssigen Verbindung durch Prägen und/oder Verschweißen sind die Trägerfolie und die Hülle in einer vorteilhaften Ausgestaltung vollflächig miteinander verklebt, was beispielsweise mittels zweier Klebstoff-Schichten geschieht. Auch ein flächiges Laminieren ist möglich.

Ausführungsbeispiele eines erfindungsgemäßen Transponders werden nachfolgend anhand der Zeichnungen erläutert.

Dabei zeigen:
- Figur 1: ein "Inlay", bestehend aus Trägerfolie, Antenne, Chip und Bonding-Stellen, eines Transponders,
- Figur 2: schematisch den schichtweisen Aufbau eines Transponders,
- Figur 3: eine schematische Draufsicht eines erfindungsgemäßen Transponders mit Prägestreifen an den Längsseiten, und
- Figur 4: eine schematische Schnittdarstellung durch einen erfindungsgemäßen Transponder.

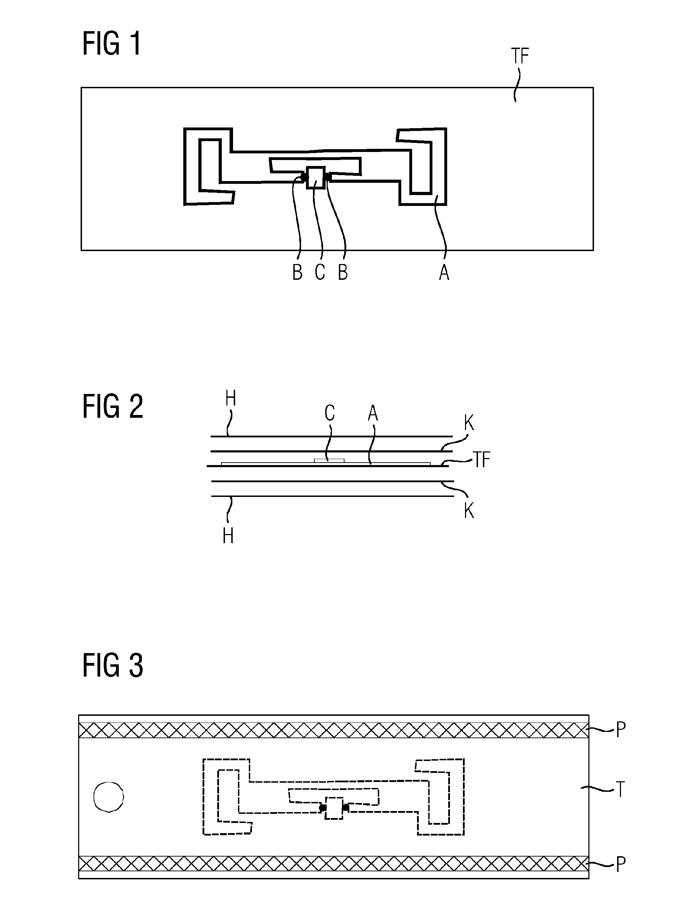

In der Figur 1 ist ein sog. "Inlay" eines Transponders T dargestellt, welches aus einer Trägerfolie TF besteht, auf die eine flächige Antenne A aufgebracht ist. Im vorliegenden Fall handelt es sich bei der flächigen Antenne A um eine aufgedampfte Metallschicht (z.B. Aluminium); von der Antenne A sind in der Figur 1 die Konturen schematisch dargestellt.

Über Verbindungsstellen B ("Bonding") ist ein elektronischer Schaltkreis C ("Chip") elektrisch mit der Antenne A verbunden.

Die Figur 2 zeigt schematisch den schichtweisen Aufbau eines gebräuchlichen Transponders, wobei die Trägerfolie TF mit der Antenne A und dem elektronischen Schaltkreis C durch eine obere und eine untere Schicht einer Hülle H eingebettet ist. Zwischen dem "Inlay" aus der Trägerfolie TF, der Antenne A und dem elektronischen Schaltkreis C und den Schichten der Hülle H ist jeweils eine Klebstoff-Schicht K eingefügt, wobei die Klebstoff-Schichten K das "Inlay" und die Hülle H miteinander verbinden. Aus Gründen der Übersichtlichkeit sind zwischen den einzelnen Schichten in der Figur 2 Abstände eingezeichnet, die bei einem realen Transponder T jedoch nicht vorhanden sind, d.h., dass die Schichten miteinander verklebt oder miteinander laminiert sind.

Die Figur 3 zeigt schematisch die Draufsicht eines erfindungsgemäßen Transponders, wobei die Hülle H und das "Inlay" in Randbereichen der Längskanten mittels einer streifenförmig ausgeführten Prägung P miteinander formschlüssig verbunden ("verzahnt") sind. Die wegen der undurchsichtigen Hülle H nicht sichtbaren Elemente des Inlays, nämlich die Antenne A, die Bonding-Stellen B und der elektronische Schaltkreis C, sind zur besseren Übersichtlichkeit in der Figur 3 gestrichelt dargestellt. Dabei ist zu sehen, dass sich die Prägung P außerhalb der genannten Bauteile des Inlays befindet, um Beschädigungen der Bauteile zu verhindern. Auf der linken Seite der Figur 3 ist eine Öffnung im Transponder T zu sehen, welche der Montage an einem Werkstück o.ä. dient. Für die Funktion des Transponders T und für die vorliegende Erfindung ist diese Öffnung jedoch unerheblich.

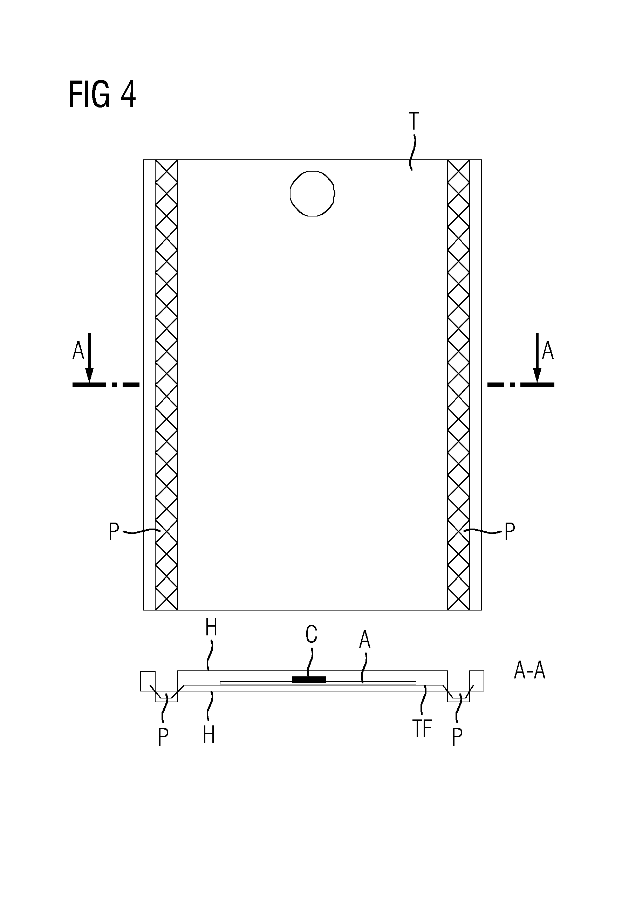

Die Figur 4 zeigt im oberen Teil ebenfalls eine Draufsicht des erfindungsgemäßen Transponders T mit einer Prägung P an den Längsseiten, wobei entlang einer Linie A-A ein Schnitt vorgenommen wurde, welcher im unteren Teil der Figur 4 schematisch dargestellt ist. Dabei ist zu sehen, dass die Prägung P wiederum außerhalb der Fläche der Antenne A und des elektronischen Schaltkreises C verläuft. Die Trägerfolie TF ist jedoch durch den Bereich der Prägung P geführt, d.h., dass die Trägerfolie TF des "Inlays" im Bereich der Prägung P mit den Schichten der Hülle H verzahnt ist.

Durch das Aufbringen einer Prägung P (Prägestruktur) auf dem Papier bzw. dem Material der Hülle H des Transponders T wird verhindert, dass sich die Schichten H, TF des Transponders T durch unterschiedliche Wärme-Ausdehnungskoeffizienten zueinander verschieben, so dass ein Auffalten oder Verformen der Antenne A und eine Beschädigung der Bonding-Stellen B verhindert wird. Durch die unterbliebenen "Schrumpfungsspuren" wird eine durch die Erwärmung bedingte Verformung und damit "Verstimmung" der Antenne A verhindert.

## Patentansprüche

1. Transponder (T) für ein funkbasiertes Identifikationssystem,
mit einer Trägerfolie (TF), wobei auf der Trägerfolie (TF) eine flächige Antenne (A) und ein elektronischer Schaltkreis (C) aufgebracht sind, und
wobei die Trägerfolie (TF) mit der Antenne (A) und dem Schaltkreis (C) in einer Hülle (H) aus einem flexiblen Material eingebettet ist,
**dadurch gekennzeichnet,**
**dass** zumindest in einem Randbereich des Transponders (T) die Trägerfolie (TF) und die Hülle (H) mittels einer Prägung (P) formschlüssig miteinander verbunden sind.

2. Transponder (T) nach Patentanspruch 1,
**dadurch gekennzeichnet,**
**dass** die Prägung (P) als ein Waffelmuster oder in einer Fischgrät-Struktur ausgeführt ist.

3. Transponder (T) nach einem der vorhergehenden Patentansprüche,
**dadurch gekennzeichnet,**
**dass** das flexible Material eine Kunststofffolie oder ein faserverstärktes synthetisches Papier ist.

4. Transponder (T) nach Patentanspruch 3,
**dadurch gekennzeichnet,**
**dass** im Fall der Ausführung der Hülle (H) aus synthetischem Papier die Innenseite der Hülle (H) mit einem Kunststoff beschichtet ist, wobei im Bereich der Prägung (P) die Hülle (H) und die Trägerfolie (TF) miteinander verschweißt sind.

5. Transponder (T) nach einem der vorhergehenden Patentansprüche,
**dadurch gekennzeichnet,**
**dass** die Prägung P vollumfänglich umlaufend an den Außenkanten des Transponders (T) ausgeführt ist.

6. Transponder (T) nach einem der vorhergehenden Patentansprüche,
**dadurch gekennzeichnet,**
**dass** der Transponder (T) rechteckig oder streifenförmig ausgeführt ist, wobei die Prägung (P) linienförmig zumindest an den beiden Längskanten ausgeführt ist.

7. Transponder (T) nach einem der vorhergehenden Patentansprüche,
**dadurch gekennzeichnet,**
**dass** die Prägung (P) außerhalb der flächigen Antenne (A) und außerhalb des elektronischen Schaltkreises (C) ausgeführt ist.

8. Transponder (T) nach einem der vorhergehenden Patentansprüche,
**dadurch gekennzeichnet,**
**dass** die Trägerfolie (TF) und die Hülle (H) vollflächig miteinander verklebt oder verschweisst sind.
